# EUROPÄISCHE PATENTSCHRIFT

(11) **EP 1 644 648 B1**
(45) Veröffentlichungstag und Bekanntmachung des Hinweises auf die Patenterteilung: **03.04.2013**
(21) Anmeldenummer: 04762354.1
(22) Anmeldetag: 08.07.2004
(51) Int. Cl.: F16C 19/18, F16C 33/64, B60B 27/00

(54) **LAGERRING UND RADLAGEREINHEIT**
BEARING RING AND WHEEL BEARING UNIT
BAGUE D'UN ENSEMBLE PALIER DE ROUE

(30) Priorität: 10.07.2003 DE 10331180
(43) Veröffentlichungstag der Anmeldung: 12.04.2006
(73) Patentinhaber: Schaeffler Technologies AG & Co. KG, 91074 Herzogenaurach (DE)
(72) Erfinder: NIEBLING, Peter, 97688 Bad Kissingen (DE); HOFMANN, Heinrich, 97422 Schweinfurt (DE); DLUGAI, Darius, 97422 Schweinfurt (DE); HEIM, Jens, 97424 Schweinfurt (DE); LANGER, Roland, 97523 Schwanfeld (DE); DÖPPLING, Horst, 91074 Herzogenaurach (DE); STEINBERGER, Wolfgang, 91074 Herzogenaurach (DE)
(86) Internationale Anmeldenummer: PCT/DE2004/001465
(87) Internationale Veröffentlichungsnummer: WO 2005/008085

(56) Entgegenhaltungen:
- EP-A- 1 031 439
- DE-C- 924 924
- DE-U- 7 032 767
- GB-A- 2 298 685
- PATENT ABSTRACTS OF JAPAN Bd. 2003, Nr. 05, 12. Mai 2003 (2003-05-12) -& JP 2003 025803 A (KOYO SEIKO CO LTD), 29. Januar 2003 (2003-01-29)
- PATENT ABSTRACTS OF JAPAN Bd. 1997, Nr. 10, 31. Oktober 1997 (1997-10-31) -& JP 09 151950 A (NTN CORP), 10. Juni 1997 (1997-06-10)
- PATENT ABSTRACTS OF JAPAN Bd. 1996, Nr. 04, 30. April 1996 (1996-04-30) -& JP 07 317777 A (NTN CORP), 8. Dezember 1995 (1995-12-08)

## Beschreibung

### Gebiet der Erfindung

Die Erfindung betrifft einen Lagerring einer Radlagereinheit, der einteilig aus kaltumgeformten Blech gebildet ist und eine Radlagereinheit mit einem derartigen Lagerring.

### Hintergrund der Erfindung

US 3,757883 zeigt eine Radlagereinheit, bei der der innere und der äußere Lagerring kalt aus Blech geformt sind. Die Lagerringe sind um die Rotationsachse der Radlagereinheit hohlzylindrisch ausgebildet und weisen jeweils zwei Laufbahnen für Wälzkörper auf. Der äußere Lagerring weist an seiner von den Laufbahnen abgewandten Seite einen radial nach außen gerichteten Flansch auf, mit dem die Radlagerung fahrzeugseitig fest ist. Der innere Lagerring ist mit einem gleichfalls nach außen gerichteten Anschlussflansch versehen, an dem die Bremsscheibe sowie das über den inneren Lagerring angetriebene Rad eines Fahrzeuges befestigt sind. Die Laufbahnen sind radial zumindest teilweise vertieft in den jeweiligen Lagerring eingebracht und durch Schultern voneinander getrennt. An den radial nach außen von den Laufbahnen abstehenden Schultern laufen die Laufbahnen des zweireihigen Schrägkugellagers , aus.

Die spanlos aus Blech hergestellten Lagerringe sind sehr massiv ausgebildet. Das wirkt sich nachteilig auf die Gesamtbilanz der am Fahrzeug ungefederten Massen aus. Aufgrund ihrer Dickwandigkeit sind die Lagerringe zudem relativ steif, so dass ein unter Umständen gewünschtes elastisches Einfedern der Lagerringe ausgeschlossen ist. Eine derartige Lageranordnung ist aufgrund der hohen Steifigkeit der Lagerringe nur äußerst schwer spielfrei vorzuspannen.

Aus JP 2003 025803 A , siehe Oberbegriff des Anspruchs 1 der vorliegenden Erfindung, ist ein zweireihiges Radlager mit einem kaltumgeformten Lagerring und einem Flansch bekannt, wobei das Radlager einen Bord aufweist, der axial zwischen den Laufbahnen um die Rotationsachse verläuft. Ferner weist das Radlager an der von den Laufbahnen abgewandten Umfangsseite des Lagerrings eine ringförmige, großflächige Senke auf.

DE-U-7032767, siehe Oberbegriff des Anspruchs 1 der vorliegenden Erfindung, zeigt ein Lenkspindellager zur Lagerung einer Lenkspindel in einem Tragrohr, umfassend einen Lageraußenring mit einem nach radial innen gewölbten halbwellenförmigen Profilabschnitt und mit an die Enden des halbwellenförmigen Profilabschnitts anschließenden, im wesentlichen achsparallelen Endabschnitten.

### Zusammenfassung der Erfindung

Die Aufgabe der Erfindung ist es daher, einen Lagerring für eine Radlagereinheit zu schaffen, mit dessen Einbau in die Radlagereinheit die zuvor genannten Nachteile vermieden sind.

Diese Aufgabe ist nach dem Gegenstand des Anspruches 1 gelöst. Ein Lagerring einer Radlagereinheit ist einteilig im wesentlichen aus umgeformten Blech gebildet. Die Gestalt des Lagerringes mit allen seinen Formelementen ist demnach ausschließlich durch Umformen hergestellt. Trennende oder spanabhebende Bearbeitung ist nur auf einen sehr geringen Umfang der Bearbeitung im Vergleich zum Umfang der spanlosen Bearbeitung begrenzt. So sind durch Trennen bzw. Lochen nur überschüssiges Material, Ränder, Grate oder weiter Ähnliches vom Formteil entfernt. Spanabhebend sind gegebenenfalls nur die Laufbahnen durch Feinbearbeitung wie Schleifen, Läppen oder Polieren nachgearbeitet. Unter dem Begriff Kaltumformen sind alle die Umformverfahren zuverstehen, bei denen die Kontur des hohlen Lagerringes durch Dehnen oder Stauchen, Aufweiten bzw. Einschnüren und dabei plastische Formänderung des Ausgangsmateriales ohne Werkstofftrennung herstellbar sind. Derartige Verfahren sind z. B. Ziehen, Tiefziehen, Rollieren, Pressen und Kombinationen der vorgenannten Verfahren.

Als Rohlinge für die Herstellung der erfindungsgemäßen Lagerringe sind z. B. Rohre und Bleche vorgesehen. Ein Rohling aus einem Rohr ist durch Aufweiten, Rollieren, Einschnüren, Stauchen und Umlegen von Rändern zu dem fertigen Lagerring bearbeitet. Aus Blech hergestellte Lagerringe gemäß Erfindung sind durch Ziehen und weitere einzelne bzw. Kombinationen der vorgenannten Verfahren hergestellt. Bevorzugte Werkstoffe sind kaltformbare Lagerwerkstoffe wie z. B. 100Cr6 oder auch alle geeigneten Tiefziehstähle.

Der Lagerring weist folgende durch Kaltumformen erzeugte Formelemente auf:
- einen um eine Rotationsachse der Radlagereinheit hohlzylindrisch ausgebildeten Grundkörper,
- wenigstens zwei Laufbahnen für Wälzkörper,
- zumindest einen von dem Lagerring radial zur Rotationsachse abgehenden Flansch, wobei der Flansch einteilig mit dem Blech des Lagerringes ausgebildet ist,
- einen Bord, wobei der Bord axial zwischen den Laufbahnen um die Rotationsachse verläuft. Der Bord ist ebenfalls einteilig aus dem Material des Lagerringes gebildet und steht radial zur Rotationsachse hin oder von der Rotationsachse weg zwischen den Laufbahnen hervor, wobei der Bord ausgehend von einem radial tiefsten Punkt einer Ringnut radial dicker ist als die radial größte Wandstärke der hohlzylindrischen Abschnitte.
- Die Ringnut schließt sich an einer von den Laufbahnen abgewandten Umfangsseite des Lagerringes radial an den Bord an. Sie ist mit dem Bord radial gleich gerichtet entweder von innen nach außen in den Lagerring vertieft oder radial von außen nach innen in den Lagerinnenring vertieft eingeformt, wobei sich die Ringnut teilweise radial in den Bord hinein bis zwischen die Reihen der Wälzkörper erstreckt.
- hohlzylindrische Abschnitte, in die der Lagering beidseitig des Bordes übergeht, wobei sich beidseitig des Bordes jeweils einer der Abschnitte an jeweils eine der Laufbahnen anschließt.

Ein derartig gestalteter Lagerring ist aufgrund der als Entlastungskerbe wirkenden Ringnut in Lastrichtung der Wälzkörper elastisch und aufgrund der geregelten Textur des Werkstoffes aus der spanlosen Fertigung äußerst belastbar. Weiterhin zeichnet sich der Lagerring durch ein geringes Gewicht aus, da Ausgangsmaterial geringer Wandstärke bzw. geringer Blechdicke eingesetzt ist. Die Stärke bzw. Dicke des Ausgangsmateriales liegt vorzugsweise im Bereich von 2, 4 bis 5 mm. Der Lagerring ist wahlweise als äußerer Lagerring bzw. innerer Lagerring gestaltet, wobei jedoch dem äußeren Lagerring mit dieser Erfindung der Vorzug gegeben ist.

Weitere Ausgestaltungen des Lagerringes sind im nachfolgenden Kapitel "Detaillierte. Beschreibung der Zeichnungen" näher beschrieben.

Mit der Erfindung ist eine Radlagereinheit vorgesehen, die wenigstens einen der erfindungsgemäßen Lagerringe aufweist. Die Radlagerung weist ein doppelreihiges Schrägkugellager, vorzugsweise der O-Anordnung, auf. Die erfindungsgemäße Radlagereinheit ist wenigstens mit einem erfindungsgemäßen Lagerring sowie einem konzentrisch zu dem Lagerring angeordneten Stützring und zwischen dem Stützring sowie dem Lagerring angeordneten Reihen von Wälzkörpern gebildet. Die Wälzkörper sind Kugeln. Dabei weisen wahlweise sowohl der Lagerring als auch der Stützring jeweils zwei Laufbahnen für die Kugeln auf. Alternativ dazu ist die Radlagereinheit zusätzlich mit einem Flanschring versehen, der einen Stützring mit einer Laufbahn aufnimmt und an dem eine weitere Laufbahn direkt ausgebildet ist.

### Kurze Beschreibung der Zeichnungen

Weitere Ausgestaltungen der Erfindung sowie eine Ausführungsform der Erfindung ist in den Figuren 1 bis 4 näher beschrieben. Es zeigen im einzelnen:
- Figur 1: eine Gesamtansicht eines erfindungsgemäßen Lagerringes,
- Figur 2: den Lagerring nach Figur 1 in einer Frontalansicht,
- Figur 3: den Lagerring nach Figur 1 in einem Längsschnitt, geschnitten entlang der Linie II - II aus Figur 3 und
- Figur 4: einen Längsschnitt durch eine Radlagereinheit, die fahrzeugseitig zumindest drehfest ist.
- Figur 5: ein weiteres Ausführungsbeispiel eines Lagerringes im Längsschnitt,
- Figur 6: das Detail X des Lagerringes nach Figur 5, vergrößert dargestellt und
- Figur 7: das Detail Y des Lagerringes nach Figur 5, vergrößert dargestellt.

### Detaillierte Beschreibung der Zeichnungen

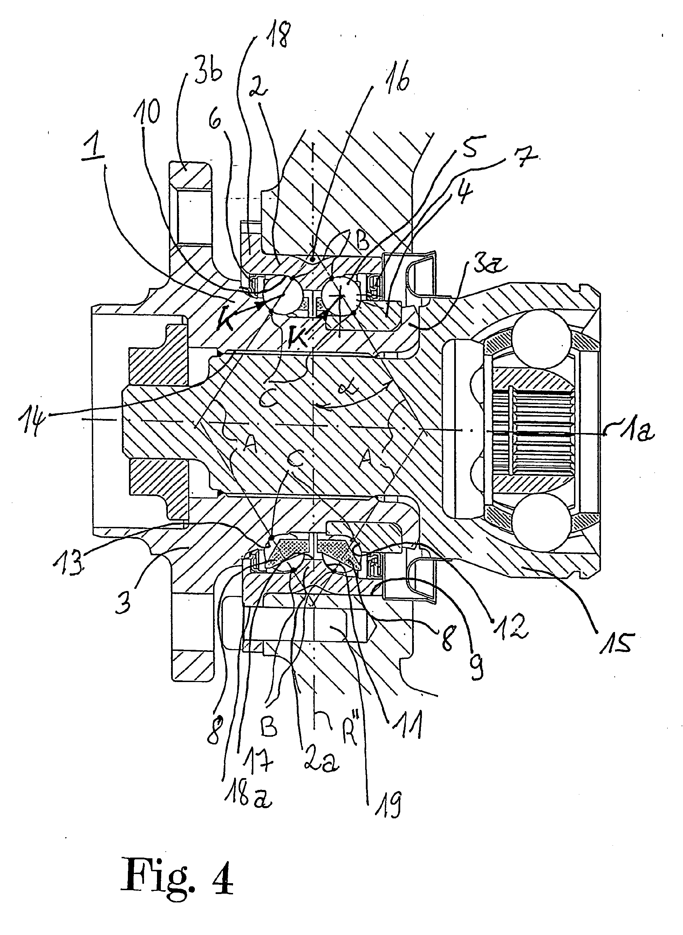

Figur 4 zeigt eine Radlagereinheit 1 mit einem Lagerring 2 gemäß Erfindung für ein angetriebenes und gelenktes Fahrzeugrad. Der Lagerring bzw. die Radlagereinheit gemäß Erfindung sind alternativ dazu auch für nicht angetriebene und/oder nicht gelenkte Räder vorgesehen. Die Radlagereinheit 1 weist weiter einen Flanschring 3, einen Stützring 4, zwei Reihen Wälzkörper 5 in Form von Kugeln, und Dichtungen 6 und 7 auf. Jede der Reihen Wälzkörper 5 ist jeweils mit einem Käfig 8 gehalten und geführt.

Die Radlagereinheit 1 ist in einer Bohrung 9 mit dem als Außenring ausgebildeten Lagerring 2 fest. Dazu ist der Lagerring 2 in die Bohrung 9 eingepresst und radial so weit elastisch eingeschnürt, dass die Radlagereinheit 1 vorgespannt ist. Die Wälzkörper 5 stützen sich dabei zur einen Seite innen umfangsseitig des Lagerringes 2 an Laufbahnen 10 und 11 und in die andere Richtung an Laufbahnen 12 und 13 ab. Die Laufbahn 12 ist an dem Stützring 4 ausgebildet. Die Laufbahn 13 ist in den Flanschring 3 eingebracht. Die Laufbahnen 11 und 12 bzw. 10 und 13 sind jeweils in Richtung der Rotationsachse 1 a der Radlagereinheit 1 gegeneinander versetzt angeordnet und zumindest teilweise an einem radial wenigstens zwischen den Reihen der Wälzkörper 5 aus dem Lagerring 2 hervorstehenden Bord 2a ausgebildet.

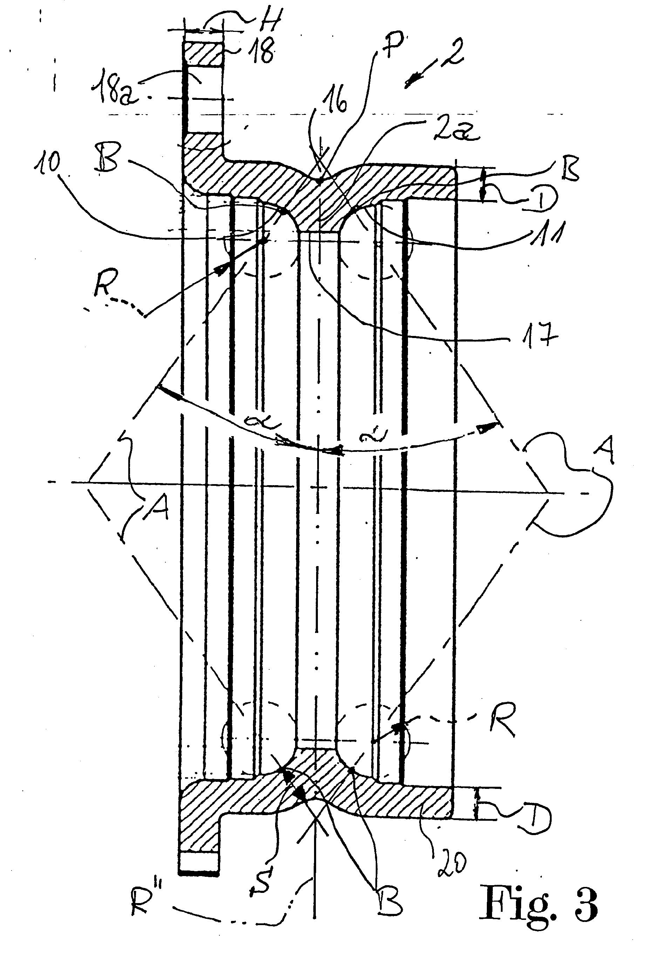

Die Reihen Wälzkörper 5 sind zueinander in einer sogenannten O-Anordnung angeordnet. In dieser O-Anordnung sind die Schnittpunkte der Berührungslinien A mit der Rotationsachse 1 a der jeweiligen Reihen axial voneinander entfernt. Der Druckwinkel α ist für eine derartige Anordnung in einem Bereich von 20 bis 45° vorgesehen (Figur 3, Figur 4). Dabei ist der Druckwinkel α der Winkel, den die Verbindungslinien A zwischen den beiden Berührungspunkten B und C zwischen Wälzkörper 5-und Laufbahnen 10 und 13 bzw. 11 und 12 mit der gedachten Radialebene R" einschließen. Hierzu sei noch bemerkt, dass sich die Wälzkörper 5 nicht punktförmig an der jeweiligen Laufbahn 10,11,12 oder 13 abstützen, sondern sich zumindest unter Last in eine Laufbahnen 10, 11, 12 oder 13 eng einschmiegen. Die Laufbahnen 10, 11, 12 oder 13 sind deshalb mit einem Rillenradius R versehen der nur geringfügig größer als der Kugelradius K der Wälzkörper 5 ist. Das in der Fachwelt unter dem Begriff "Schmiegung" bezeichnete [Verhältnis] von Rillenradius R zu Kugelradius K beträgt vorzugsweise für die Laufbahnen 10 und 11 am Außenring, in diesem Falle an dem Lagerring 2, [1,055 : 1] sowie an den Innenlaufbahnen 12 und 13 in diesem Falle an dem Stützring 3 bzw. am Flanschring 3, [1, 035 : 1]. Die Berührungspunkte B und C sind demnach bei Schmiegung die Mittelpunkte der Berührungs- bzw. Aufstandsflächen zwischen Wälzkörper und Laufbahn, die von den auch unter dem Begriff "Kontaktlinien" bekannten Verbindungslinien A durchstoßen werden.

Der Flanschring 3 ist um die Rotationsachse 1 a drehbar zu dem fahrzeugfesten Lagerring 2 angeordnet und nimmt dabei den Stützring 4 mit. Der Stützring 4 ist mittels eines an dem Stützring 4 anliegenden Bördelbordes 3a des Flanschringes zumindest axial auf dem Flanschring 3 gesichert. Von dem Flanschring 3 steht radial ein Anschlussflansch 3b ab, an dem üblicherweise eine Bremsscheibe sowie die Felge eines Fahrzeugrades befestigt ist. Der Flanschring 3 ist angetrieben und weist dafür an seinem Innenumfang eine Kerbverzahnung 14 auf, in die ein hier nicht näher beschriebenes und angetriebenes Antriebselement 15 formschlüssig eingreift.

Der Lagerring 2 ist radial außenseitig mit einer Ringnut 16 versehen(s. a. Figur 3). Die Ringnut 16 schließt sich radial außen dem Bord 2a an. Nach den Erfindung ist vorgesehen, daß sich die Ringnut 16 radial bis in den Bord 2a hinein und sich sogar teilweise radial bis zwischen die Reihen der Wälzkörper 5 erstreckt. Der Lagerring 2 ist aufgrund der Ringnut 16 in die mit dem Verlauf der Verbindungslinien A gekennzeichneten Stützrichtungen elastisch frei beweglich. Das Material des Lagerringes 2 verformt sich unter Last im Bereich der Laufbahnen 10 und 11 zur Ringnut 16 hin elastisch, da der Lagerring 2 an dieser Stelle aufgrund der Ringnut 16 radial in der Aufnahme des Lagerringes 2 nicht unterstützt ist. Dies ist sowohl beim elastischen Vorspannen der Radlagereinheit 1 beim Einbau sowie für die Radlagereinheit 1 im Fahrzeugbetrieb von Vorteil, da Überlastungen aufgrund von kurzzeitigen punktuellen Spannungsspitzen im Wälzkontakt vermieden sind.

Die Ringnut 16 ist an dem Lagerring 2 durch Einschnüren des Lagerringes 2 in Richtung der Rotationsachse zu dem Bord 2a gebildet. Der Bord 2a ist ausgehend von dem radial tiefsten Punkt P (Figur 3) der Ringnut 16 radial dicker als die Wandstärke/Dicke des Ausgangsmateriales, wobei der Bord 2a radial entgegengesetzt zum Flansch 18 nach innen in Richtung der Rotationsachse 1 a weist. Am Innenumfang des Bordes 2a ist eine in radiale Richtung weisende zylindrische Mantelfläche 17 ausgebildet. Der Bord 2a ist flankenseitig eine Schulter für jede der Laufbahnen 10 bzw. 11 und steht radial über die Laufbahnen in Richtung der Rotationsachse aus dem Lagerring 2 hervor. Die Wandstärke des Lagerringes 2 ist zwischen der Ringnut 16 und der jeweiligen Laufbahn 10 bzw. 11 an stärkster Stelle S zumindest so dick wie die Wandstärke/Dicke des Ausgangsmateriales. Außerdem weist der Lagerring 2 einen hohlzylindrischen Abschnitt 20 auf, dessen Wandstärke geringer ist als die Wandstärke/Dicke des Ausgangsmateriales (Figur 3).

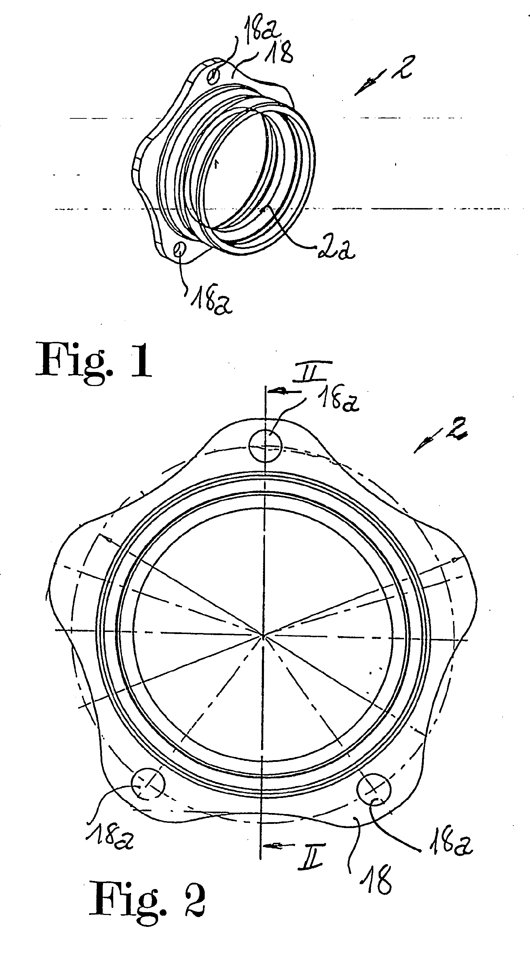

Radial von dem Lagerring 2 geht nach außen ein einteilig mit dem Lagerring 2 ausgebildeter Flansch 18 ab. In den Flansch 18 sind umfangsseitig gleichmäßig zueinander beabstandete Durchgangslöcher 18a eingebracht (Figur 1 und 2) durch die, wie in Figur 4 dargestellt, jeweils ein Bolzen 19 hindurchgreift. Mit den Bolzen 19 ist der Lagerring 2 in Umfangsrichtung gegen Mikrobewegungen und umfangsseitig sowie axial gegen Wandern aus der Bohrung 9 gesichert. Die Bolzen 19 sind mittels Presssitzes alternativ durch Gewinde zur Umgebungskonstruktion der Radlagereinheit 1 fest. Der Flansch 18 weist die Stärke H des Ausgangsmateriales auf. Die Dicke bzw. Wandstärke des Ausgangsmateriales ist in Abhängigkeit des für die Herstellung des Lagers verwendeten Rohlings definiert und unter dem gemeinsamen Begriff "Stärke" zusammengefasst. Als Rohlinge sind Bleche alternativ Rohre vorgesehen. Der Begriff "Di"cke" ist dem Blech und der Begriff "Wandstärke" ist dem Rohr als Ausgangsmaterial zugeordnet. Figur 4 zeigt bis auf die teilweise radial in den Bord sich hinein erstreckende Ringnut sämtliche, Merkmale des Anspruchs 1 der vorliegenden Erfindung.

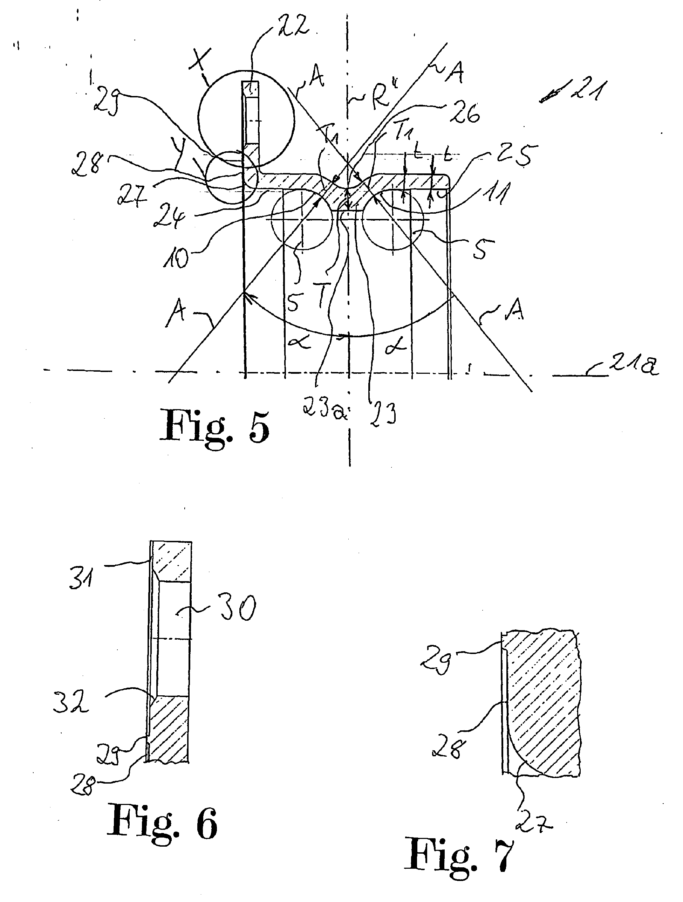

In Figur 5 ist ein Ausführungsbeispiel eines Lagerringes 21 dargestell, das bis auf die teilweise radial in den Bord sich hinein erstreckende Ringnut sämtliche, Merkmale des Anspruchs 1 der vorliegenden Erfindung zeigt. Der Lagerring 21 ist einteilig mit einem Flansch 22 ausgebildet. An seinem Innenumfang weist der Lagerring 21 die Laufbahnen 10 und 11 auf. Die Laufbahnen 10 und 11 sind teilweise an einem Bord 23 ausgebildet. Somit ist der Bord 23 beidseitig mit jeweils einer Schulter zum Abstützen von Wälzkörpern 5 versehen. Der Bord 23 steht radial in Richtung der Rotationsachse 21 a nach innen hervor und weist eine zur Rotationsachse 21 a hin weisende zylindrische Mantelfläche 23a auf. Dem Bord 23 schließt sich radial außen eine Ringnut 26 an. Der Lagerring 21 geht axial beidseitig jeweils in einen sich der Laufbahn 10 bzw. Laufbahn 11 axial anschließenden hohlzylindrischen Abschnitt 24 bzw. 25 über. Die radial größten Wandstärken t der hohlzylindrischen Abschnitte 24 bzw. 25 sind kleiner als der kleinste radiale Abstand T zwischen dem radial tiefsten Punkt P₁ in der Ringnut 26 und der zylindrischen Mantelfläche 23a.

Die durch die Laufbahnen 10 und 11 verlaufenden Kontaktlinien A durchdringen die axial mittig durch die Ringnut verlaufende Ebene R" und schließen die Druckwinkel_{α} zwischen sich und der Ebene R" ein. Die mit dem Verlauf der Kontaktlinien A gleichgerichtete geringste Wandstärke T₁ des Bordes 23 ist im Bereich der Laufbahnen 10 und 11 größer als die radial größte Wandstärke t der hohlzylindrischen Abschnitte 24 und 25. Die Kontaktlinien A treten in der Ringnut 26 nach außen aus dem Lagerring 23 heraus.

Der hohlzylindrische Abschnitt 24 geht über eine Kantenverrundung 27 in den Flansch 22 über (Figur 7). Die Kantenverrundung 27 läuft in einer kreisringförmigen Planfläche 28 aus. Der Planfläche 28 ist radial außen umlaufend von einem axial aus dem Flansch 23 hervorstehenden Vorsprung 29 begrenzt. Der Vorsprung 29 verläuft radial zwischen der Planfläche 28 und drei in dem Flansch 22 eingebrachten Flanschlöchern 30 . Die Flanschlöcher 30 sind von wenigstens einer weiteren Planfläche 31 ausgehende Durchgangslöcher. Die Planfläche 31 liegt entweder, wie in Figur 6 dargestellt, auf gleicher Ebene wie die Planfläche 28 oder Verläuft parallel zu dieser in einer anderen Ebene. Die Durchgangslöcher sind jeweils an dem Übergang zur Planfläche 31 mit einer Fase 32 versehen.

### Bezugszeichen

- 1: Radlagereinheit
- 1a: Rotationsachse
- 2: Lagerring
- 2a: Bord
- 3: Flanschring
- 3a: Bördelbord
- 3b: Anschlussflansch
- 4: Stützring
- 5: Wälzkörper
- 6: Dichtung
- 7: Dichtung
- 8: Käfig
- 9: Bohrung
- 10: Laufbahn
- 11: Laufbahn
- 12: Laufbahn
- 13: Laufbahn
- 14: Kerbverzahnung
- 15: Antriebselement
- 16: Ringnut
- 17: Mantelfläche
- 18: Flansch
- 18a: Durchgangsloch
- 19: Bolzen
- 20: Abschnitt
- 21: Lagerring
- 21 a: Rotationsachse
- 22: Flansch
- 23: Bord
- 23a: Mantelfläche
- 24: Abschnitt
- 25: Abschnitt
- 26: Ringnut
- 27: Kantenverrundung
- 28: Planfläche
- 29: Vorsprung
- 30: Flanschloch
- 31: Planfläche
- 32: Fase

## Patentansprüche

1. Lagerring (2, 21) einer Radlagereinheit (1), der einteilig aus kaltumgeformten Ausgangsmaterial gebildet ist und dabei
- um eine Rotationsachse (1 a, 21 a) der Radlagereinheit (1) hohlzylindrisch ausgebildet ist,
- wenigstens zwei Laufbahnen (10, 11) für Wälzkörper (5) aufweist,
- zumindest mit einem radial zur Rotationsachse (1a, 21a) abgehenden Flansch (18, 22) versehen ist,
- einen Bord (2a, 23) aufweist, wobei der Bord (2a, 23) axial zwischen den Laufbahnen (10, 11) um die Rotationsachse (1 a, 21 a) verläuft sowie radial zwischen den Laufbahnen (10, 11) aus dem Lagerring (2, 21) hervorsteht und
- eine als Entlastungskerbe wirkende Ringnut (16, 26) aufweist, wobei sich die Ringnut (16, 26) an einer von den Laufbahnen (10, 11) abgewandten Umfangsseite des Lagerringes (2, 21) radial an den Bord (2a, 23) anschließt und wobei sich die Ringnut (16, 26) mit dem Bord (2a, 23) radial gleichgerichtet zumindest teilweise radial in den Lagerring (2, 21) erstreckt, **dadurch gekennzeichnet,**
- **dass** der Lagerring (2, 21) axial beidseitig des Bordes (2a, 23) in hohlzylindrische Abschnitte (20, 24, 25) übergeht, wobei sich beidseitig des Bordes (2a, 23) jeweils einer der Abschnitte (24, 25) an jeweils eine der Laufbahnen (10, 11) anschließt.
- **dass** der Bord (2a, 23) ausgehend von einem radial tiefsten Punkt in der Ringnut (16, 26) radial dicker ist als die radial größte Wandstärken des jeweils zugeordneten Abschnitts (20, 24, 25).
- und **dass** sich die Ringnut (16) teilweise radial in den Bord (2a) hinein bis zwischen die Reihen der Wälzkörper (5) erstreckt.

2. Lagerring nach Anspruch 1, der durch Einschnüren des Lagerringes (2, 21) in Richtung der Rotationsachse (1 a, 21 a) zu dem Bord (2a) gebildet ist.

3. Lagerring nach Anspruch 1, der an der Stelle des radial tiefsten Punkts in der Ringnut (16, 26) radial dicker ist als im Bereich des hohlzylindrischen Abschnitts (20).

4. Lagering nach Anspruch 1, bei dem der Bord (2a, 23) zwischen den Laufbahnen (10, 11) eine in radiale Richtung weisende zylindrische Mantelfläche (17, 23a) aufweist.

5. Lagering nach Anspruch 4, wobei sich beidseitig des Bordes (2a, 23) jeweils einer der Abschnitte (24, 25) an jeweils eine der Laufbahnen (10, 11) anschließt und wobei die radial größte Wandstärken der Abschnitte (20, 24, 25) kleiner ist als der kleinste radiale Abstand zwischen der zylindrischen Mantelfläche (17, 23a) und einem radial tiefsten Punkt in der Ringnut (16, 26).

6. Lagerring nach Anspruch 1, bei dem der Bord (2a, 23) jeweils eine Schulter für jede der Laufbahnen (10, 11) aufweist.

7. Lagerring nach Anspruch 6, bei dem die Laufbahnen (10, 11) zumindest teilweise an dem Bord (2a, 23) ausgebildet sind.

8. Lagerring nach Anspruch 6, bei dem der Bord (2a, 23) radial über die Laufbahnen (10,11) hinaus aus dem Lagerring (2, 21) hervorsteht.

9. Lagerring nach Anspruch 8, mit gedachten durch die Laufbahnen (10, 11) verlaufenden Kontaktlinien, die eine gedachte von der Rotationsachse (1 a, 21 a) senkrecht durchstoßene Ebene zumindest teilweise durchdringen, wobei die Kontaktlinien mit einem spitzen Druckwinkel zu der Ebene geneigt sind und dabei die Ebene durch die Ringnut (16, 26) verläuft.

10. Lagerring nach Anspruch 9, wobei die geringste Wandstärke des Bordes (2a, 23) mit Richtung der Kontaktlinien stärker ist, als die radial größten Wandstärken der Abschnitte (24, 25).

11. Lagerring nach Anspruch 8 oder 10, bei dem die Kontaktlinien die Ringnut (16, 26) durchdringen.

12. Lagerring nach Anspruch 1, der einen radial einteilig mit dem Lagerring (2, 21) ausgebildeten und radial nach außen abgewinkelten Flansch (18, 22) aufweist, wobei der Flansch (18, 22) um die Rotationsachse (1 a, 21 a) verteilt angeordneten Flanschlöchern (18a, 30) versehen ist.

13. Lagerring nach Anspruch 12, bei dem der Flansch (22) eine kreisringförmige Planfläche (28) und einen aus dem Flansch (22) über die Planfläche (28) hinaus axial aus dem Flansch (22) hervorstehenden sowie um die Rotationsachse (1a, 21 a) umlaufenden Vorsprung (29) aufweist.

14. Lagerring nach Anspruch 13, bei dem der Vorsprung (29) radial zwischen der Planfläche (28) und den Flanschlöchern (30) verläuft.

15. Radlager (1) mit einem Lagerring (2) nach Anspruch 1, mit zwei Reihen Wälzkörpern (5), wobei jeweils eine der Reihen in einem Wälzkontakt mit einer der Laufbahnen (10, 11) steht, die Radlagereinheit (1) weiter mit wenigstens einem Stützring (4), wobei der Stützring (4) konzentrisch zu dem Lagerring (2) angeordnet ist sowie im Wälzkontakt mit wenigstens einer der Reihen Wälzkörper (5) steht.

16. Radlagereinheit (1) nach Anspruch 15, mit einem Flanschring (3), auf dem der Stützring (4) konzentrisch sitzt, wobei der Flanschring (3) wenigstens einen axial zu dem Flansch (18) beabstandeten sowie radial mit dem Flansch (18) gleichgerichteten Anschlussflansch (3b) aufweist.

17. Radlagereinheit nach Anspruch 16, die in dem Flanschring (3) eine zu den Laufbahnen (10, 11) weitere Laufbahn für den Wälzkontakt mit einer der Reihen Wälzkörper (5) aufweist.

18. Radlagereinheit nach Anspruch 17, bei der der Stützring (4) mittels eines kalt von dem Flanschring (3) abgewinkelten und axial an dem Stützring (4) anliegenden Bördelbordes (3a) axial auf dem Flanschring (3) gehalten ist.

19. Radlagereinheit nach Anspruch 15, bei der das Material des Lagerringes (2, 21) unter Last im Bereich der Laufbahnen (10, 11) zur Ringnut (16) hin elastisch verformt ist.

20. Radlagereinheit nach Anspruch 15, bei der der Flansch (18) wenigstens ein axiales Durchgangsloch (18a) aufweist, wobei durch das Durchgangsloch (18a) ein Bolzen (19) axial hindurchgreift und wobei der Lagerring (2) mittels des Bolzens (19) axial und um zur Rotationsachse (1 a) drehfest ist.

## Claims

1. Bearing ring (2, 21) of a wheel bearing unit (1), which bearing ring is designed from initial material cold-formed in one part and in this case
- is designed hollow-cylindrically about an axis of rotation (1a, 21a) of the wheel bearing unit (1),
- has at least two raceways (10, 11) for rolling bodies (5),
- is provided at least with a flange (18, 22) emanating radially with respect to the axis of rotation (1a, 21a),
- has a rim (2a, 23), the rim (2a, 23) running axially about the axis of rotation (1a, 21a) between the raceways (10, 11) and projecting radially out of the bearing ring (2, 21) between the raceways (10, 11), and
- has an annular groove (16, 26) acting as a relief notch, the annular groove (16, 26) adjoining the rim (2a, 23) radially on a circumferential side of the bearing ring (2, 21) which faces away from the raceways (10, 11), and the annular groove (16, 26) extending, radially codirectionally with the rim (2a, 23), at least partially radially into the bearing ring (2, 21), **characterized**
- **in that** the bearing ring (2, 21) merges axially on both sides of the rim (2a, 23) into hollow-cylindrical portions (20, 24, 25), in each case one of the portions (24, 25) adjoining one of the raceways (10, 11) in each case on both sides of the rim (2a, 23),
- **in that** the rim (2a, 23), starting from a radially lowest point in the annular groove (16, 26), is radially thicker than the radially greatest wall thicknesses of the in each case assigned portions (20, 24, 25),
- and **in that** the annular groove (1b) extends partially radially into the rim (2a) to between the rows of rolling bodies (5).

2. Bearing ring according to Claim 1, which is formed by contracting the bearing ring (2, 21) in the direction of the axis of rotation (1a, 21a) with respect to the rim (2a).

3. Bearing ring according to Claim 1, which is radially thicker at the location of the radially lowest point in the annular groove (16, 26), than in the region of the hollow-cylindrical portion (20).

4. Bearing ring according to Claim 1, in which the rim (2a, 23) has between the raceways (10, 11) a cylindrical outer surface area (17, 23a) pointing in the radial direction.

5. Bearing ring according to Claim 4, in each case one of the portions (24, 25) adjoining in each case one of the raceways (10, 11) on both sides of the rim (2a, 23), and the radially greatest wall thicknesses of the portions (20, 24, 25) being lower than the smallest radial distance between the cylindrical outer surface area (17, 23a) and a radially lowest point in the annular groove (16, 26).

6. Bearing ring according to Claim 1, in which the rim (2a, 23) has in each case a shoulder for each of the raceways (10, 11).

7. Bearing ring according to Claim 6, in which the raceways (10, 11) are formed at least partially on the rim (2a, 23).

8. Bearing ring according to Claim 6, in which the rim (2a, 23) projects out of the bearing ring (2, 21) radially beyond the raceways (10, 11).

9. Bearing ring according to Claim 8, with imaginary contact lines which run through the raceways (10, 11) and which at least partially penetrate an imaginary plane pierced perpendicularly by the axis of rotation (1a, 21a), the contact lines being inclined at an acute pressure angle to the plane, and in this case the plane running through the annular groove (16, 26).

10. Bearing ring according to Claim 9, the lowest wall thickness of the rim (2a, 23) being greater in the direction of the contact lines than the radially greatest wall thicknesses of the portions (24, 25).

11. Bearing ring according to Claim 8 or 10, in which the contact lines penetrate the annular groove (16, 26).

12. Bearing ring according to Claim 1, which has a flange (18, 22) produced radially in one part with the bearing ring (2, 21) and angled radially outward, the flange (18, 22) being provided with flange holes (18a, 30) arranged so as to be distributed about the axis of rotation (1a, 21a).

13. Bearing ring according to Claim 12, in which the flange (22) has an annular planar surface (28) and a projection (29) projecting axially from the flange (22) beyond the planar surface (28) and running around the axis of rotation (1a, 21a).

14. Bearing ring according to Claim 13, in which the projection (29) runs radially between the planar surface (28) and the flange holes (30).

15. Wheel bearing (1) with a bearing ring (2) according to Claim 1, with two rows of rolling bodies (5), in each case one of the rows being in rolling contact with one of the raceways (10, 11), the wheel bearing unit (1), further, with at least one supporting ring (4), the supporting ring (4) being arranged concentrically to the bearing ring (2) and being in rolling contact with at least one of the rows of rolling bodies (5).

16. Wheel bearing unit (1) according to Claim 15, with a flanged ring (3) on which the supporting ring (4) is seated concentrically, the flanged ring (3) having at least one connecting flange (3b) spaced apart axially from the flange (18) and radially codirectional with the flange (18).

17. Wheel bearing unit according to Claim 16, which has in the flanged ring (3) a raceway, further to the raceways (10, 11), for rolling contact with one of the rows of rolling bodies (5).

18. Wheel bearing unit according to Claim 17, in which the supporting ring (4) is held axially on the flanged ring (3) by means of a crimped rim (3a) cold-angled from the flanged ring (3) and bearing axially against the supporting ring (4).

19. Wheel bearing unit according to Claim 15, in which the material of the bearing ring (2, 21) is deformed elastically toward the annular groove (16) in the region of the raceways (10, 11) under load.

20. Wheel bearing unit according to Claim 15, in which the flange (18) has at least one axial passage hole (18a), a bolt (19) passing axially through the passage hole (18a), and the bearing ring (2) being fixed by means of the bolt (19) axially and in terms of rotation about the axis of rotation (1a).

## Revendications

1. Bague de palier (2, 21) d'une unité de palier de roue (1), qui est formée d'une seule pièce en un matériau de départ façonné à froid, et
- qui est réalisée sous forme cylindrique creuse autour d'un axe de rotation (1a, 21a) de l'unité de palier de roue (1),
- qui présente au moins deux pistes de roulement (10, 11) pour des corps de roulement (5),
- qui est pourvue d'au moins une bride (18, 22) faisant saillie radialement par rapport à l'axe de rotation (1a, 21a),
- qui présente un bord (2a, 23), le bord (2a, 23) s'étendant axialement entre les pistes de roulement (10, 11) autour de l'axe de rotation (1a, 21a) et faisant saillie radialement entre les pistes de roulement (10, 11) hors de la bague de palier (2, 21), et
- qui présente une rainure annulaire (16, 26) agissant en tant qu'entaille de détente, la rainure annulaire (16, 26) se raccordant radialement au bord (2a, 23) au niveau d'un côté périphérique de la bague de palier (2, 21) opposé aux pistes de roulement (10, 11) et la rainure annulaire (16, 26) s'étendant avec le bord (2a, 23) radialement dans le même sens au moins en partie radialement dans la bague de palier (2, 21), **caractérisée en ce que**
- la bague de palier (2, 21) se prolonge axialement des deux côtés du bord (2a, 23) dans des portions cylindriques creuses (20, 24, 25), à chaque fois l'une des portions (24, 25) de chaque côté du bord (2a, 23) se raccordant à une piste de roulement respective (10, 11),
- le bord (2a, 23), partant d'un point radialement le plus profond dans la rainure annulaire (16, 26), est radialement plus épais que les plus grandes épaisseurs de paroi dans le sens radial de la portion (20, 24, 25) respectivement associée,
- et la rainure annulaire (16) s'étend radialement en partie dans le bord (2a) jusqu'entre les rangées de corps de roulement (5).

2. Bague de palier selon la revendication 1, qui est formée par rétrécissement de la bague de palier (2, 21) dans la direction de l'axe de rotation (1a, 21a) jusqu'au bord (2a).

3. Bague de palier selon la revendication 1, qui est radialement plus épaisse au niveau du point radialement le plus profond dans la rainure annulaire (16, 26), que dans la région de la portion cylindrique creuse (20).

4. Bague de palier selon la revendication 1, dans laquelle le bord (2a, 23) entre les pistes de roulement (10, 11) présente une surface d'enveloppe (17, 23a) cylindrique tournée dans la direction radiale.

5. Bague de palier selon la revendication 4, dans laquelle de chaque côté du bord (2a, 23), à chaque fois l'une des portions (24, 25) se raccorde au niveau de l'une des pistes de roulement (10, 11) respectives, et dans laquelle l'épaisseur de paroi radialement plus grande des portions (20, 24, 25) est inférieure à la distance radiale la plus petite entre la surface d'enveloppe cylindrique (17, 23a) et un point radialement le plus profond de la rainure annulaire (16, 26).

6. Bague de palier selon la revendication 1, dans laquelle le bord (2a, 23) présente à chaque fois un épaulement pour chacune des pistes de roulement (10, 11).

7. Bague de palier selon la revendication 6, dans laquelle les pistes de roulement (10, 11) sont réalisées au moins partiellement au niveau du bord (2a, 23).

8. Bague de palier selon la revendication 6, dans laquelle le bord (2a, 23) fait saillie radialement au-delà des pistes de roulement (10, 11) hors de la bague de palier (2, 21).

9. Bague de palier selon la revendication 8, avec des lignes de contact imaginaires s'étendant à travers les pistes de roulement (10, 11), qui traversent au moins en partie un plan imaginaire traversé perpendiculairement par l'axe de rotation (1a, 21a), les lignes de contact étant inclinées vers le plan avec un angle de pression aigu et le plan s'étendant ainsi à travers la rainure annulaire (16, 26).

10. Bague de palier selon la revendication 9, dans laquelle l'épaisseur de paroi la plus petite du bord (2a, 23) devient plus épaisse, dans la direction des lignes de contact, que les épaisseurs de paroi radialement plus grandes des portions (24, 25).

11. Bague de palier selon la revendication 8 ou 10, dans laquelle les lignes de contact traversent la rainure annulaire (16, 26).

12. Bague de palier selon la revendication 1, qui présente une bride (18, 22) réalisée radialement d'une seule pièce avec la bague de palier (2, 21) et coudée radialement vers l'extérieur, la bride (18, 22) étant pourvue de trous de bride (18a, 30) répartis autour de l'axe de rotation (1a, 21a).

13. Bague de palier selon la revendication 12, dans laquelle la bride (22) présente une surface plane (28) en forme de bague circulaire et une saillie (29) saillant axialement hors de la bride (22) au-delà de la surface plane (28) et entourant l'axe de rotation (1a, 21a).

14. Bague de palier selon la revendication 13, dans laquelle la saillie (29) s'étend radialement entre la surface plane (28) et les trous de bride (30).

15. Palier de roue (1) comprenant une bague de palier (2) selon la revendication 1, comprenant deux rangées de corps de roulement (5), à chaque fois l'une des rangées étant en contact de roulement avec l'une des pistes de roulement (10, 11), l'unité de palier de roue (1) comprenant au moins en outre une bague de support (4), la bague de support (4) étant disposée concentriquement à la bague de palier (2), et étant en contact de roulement avec au moins l'une des rangées de corps de roulement (5).

16. Unité de palier de roue (1) selon la revendication 15, comprenant une bague de bride (3) sur laquelle repose, de manière concentrique, la bague de support (4), la bague de bride (3) présentant au moins une bride de raccordement (3b) espacée de la bride (18) et orientée radialement dans le même sens que la bride (18).

17. Unité de palier de roue selon la revendication 16, qui présente dans la bague de bride (3) une piste de roulement supplémentaire par rapport aux pistes de roulement (10, 11), pour le contact de roulement avec l'une des rangées de corps de roulement (5).

18. Unité de palier de roue selon la revendication 17, dans laquelle la bague de support (4) est maintenue axialement sur la bague de bride (3) au moyen d'un bord de bordage (3a) s'appliquant axialement contre la bague de support (4) et coudé à froid depuis la bague de bride (3).

19. Unité de palier de roue selon la revendication 15, dans laquelle le matériau de la bague de palier (2, 21) est déformé élastiquement sous charge dans la région des pistes de roulement (10, 11) vers la rainure annulaire (16).

20. Unité de palier de roue selon la revendication 15, dans laquelle la bride (18) présente au moins un trou traversant axial (18a), un boulon (19) s'engageant axialement à travers le trou traversant (18a) et la bague de palier (2) étant maintenue solidaire en rotation axialement, et autour de l'axe de rotation (1a), au moyen du boulon (19).
